# EUROPEAN PATENT APPLICATION

(11) **EP 3 067 585 A1**
(43) Date of publication of application: **14.09.2016**
(21) Application number: 14859911.1
(22) Date of filing: 05.11.2014
(51) Int. Cl.: F16F 9/46, F16F 9/32, F16F 9/34

(54) **SHOCK ABSORBER DEVICE**

(30) Priority: 08.11.2013 JP 2013231894
(71) Applicant: KYB Corporation, Tokyo 105-6111 (JP)
(72) Inventor: TERAOKA, Takashi, Tokyo 105-6111 (JP); MASAMURA, Tatsuya, Tokyo 105-6111 (JP)
(74) Representative: Grünecker Patent- und Rechtsanwälte PartG mbB
(86) International application number: PCT/JP2014/079295
(87) International publication number: WO 2015/068711

(57) **Abstract**

A shock absorber includes a cylinder, a piston that partitions the cylinder into an expansion-side chamber and a contraction-side chamber, a piston rod connected to the piston, a damping passage that allows the expansion-side chamber to communicate with the contraction-side chamber, a pressure chamber that communicates with the expansion-side chamber and the contraction-side chamber, a free piston that partitions the pressure chamber into an expansion-side pressure chamber and a contraction-side pressure chamber, a spring element configured to position the free piston in a neutral position with respect to the pressure chamber and exert a biasing force for suppressing a displacement of the free piston from the neutral position, and a damping force control unit provided in the damping passage, the damping force control unit being configured to change resistance to a flow of the hydraulic fluid passing therethrough.

## Description

### TECHNICAL FIELD

This invention relates to a shock absorber.

### BACKGROUND ART

There is known a shock absorber capable of adjusting a damping force, including a cylinder, a piston slidably inserted into the cylinder, a piston rod movably inserted into the cylinder and connected to the piston, expansion-side and contraction-side chambers partitioned by the piston inside the cylinder, a damping passage that causes the expansion-side and contraction-side chambers to communicate with each other, a spool valve for opening or closing the damping passage, a pilot valve that controls a cracking pressure of the spool valve, and a solenoid that drives the pilot valve.

In the shock absorber described above, a damping force is exerted by generating resistance to a flow of the hydraulic fluid passing through the damping passage by using a spool valve during an expanding or contacting motion. Therefore, by controlling the cracking pressure of the spool valve, it is possible to control a level of the damping force of the shock absorber (for example, see JP 2005-308178 A).

In this manner, it is possible to control the damping force of the shock absorber described above. Therefore, it is possible to generate a damping force optimum to a vibration of a vehicle chassis and improve a ride quality of the vehicle.

### SUMMARY OF INVENTION

In the shock absorber described above, it is possible to control a valve open pressure of the spool valve by controlling a pressure of the back-pressure chamber that generates an actuating force for closing the spool valve by using the pilot valve. In addition, it is possible to control the valve open pressure of the pilot valve by using a solenoid.

That is, the valve open pressure of the pilot valve is controlled by controlling an actuating force of the solenoid so as to control the pressure of the back-pressure chamber. As a result, the resistance generated by the spool valve to the flow of the hydraulic oil is controlled by controlling the valve open pressure of the spool valve.

In order to generate a damping force optimized to suppress a vehicle vibration by using the shock absorber described above, an optimum damping force is obtained by using an electronic control unit (ECU) based on vibration information of a vehicle chassis detected by various sensors, and a control command is issued to a driver of the solenoid to exert the optimum damping force.

Therefore, an upper limit of a chassis vibration frequency that can be damped by the shock absorber by controlling the damping force is restricted to several hertzs (Hz) depending on responsiveness of the spool valve and a processing speed of the ECU. For this reason, it is difficult to suppress vibrations over this frequency level.

However, a chassis vibration frequency significantly affecting the vehicle ride quality is higher than the aforementioned dampable frequency level. In the shock absorber described above, although an excellent damping effect can be obtained in restriction of a low-frequency vibration, it is difficult to suppress a high-frequency vibration. Therefore, there is still a demand for further improving the vehicle ride quality for a high-frequency vibration input.

In view of the aforementioned problems, it is therefore an object of the present invention to provide a shock absorber capable of improving a vehicle ride quality even for a high-frequency vibration input.

According to one aspect of the present invention, a shock absorber includes a cylinder in which a hydraulic fluid is sealed, a piston slidably inserted into the cylinder, the piston partitioning the cylinder into an expansion-side chamber and a contraction-side chamber, a piston rod movably inserted into the cylinder, the piston rod being connected to the piston, a damping passage that allows the expansion-side chamber to communicate with the contraction-side chamber, a pressure chamber that communicates with the expansion-side chamber and the contraction-side chamber, a free piston movably inserted into the pressure chamber, the free piston partitioning the pressure chamber into an expansion-side pressure chamber communicating with the expansion-side chamber and a contraction-side pressure chamber communicating with the contraction-side chamber, a spring element configured to position the free piston in a neutral position with respect to the pressure chamber and exert a biasing force for suppressing a displacement of the free piston from the neutral position, and a damping force control unit provided in the damping passage, the damping force control unit being configured to change resistance to a flow of the hydraulic fluid passing therethrough.

### BRIEF DESCRIPTION OF DRAWINGS

FIG. 1 is a schematic diagram illustrating a shock absorber according to a first embodiment of this invention;
FIG. 2 is a cross-sectional view illustrating main parts of the shock absorber according to the first embodiment of this invention;
FIG. 3 is a schematic diagram illustrating a shock absorber according to a second embodiment of this invention;
FIG. 4 is a schematic diagram illustrating a shock absorber according to a third embodiment of this invention;
FIG. 5 is a schematic diagram illustrating a shock absorber according to a fourth embodiment of this invention; and
FIG. 6 is a cross-sectional view illustrating main parts of the shock absorber according to the fourth embodiment of this invention.

### DESCRIPTION OF EMBODIMENTS

### <First Embodiment>

A description will now be made for a shock absorber S1 according to a first embodiment of this invention with reference to the accompanying drawings.

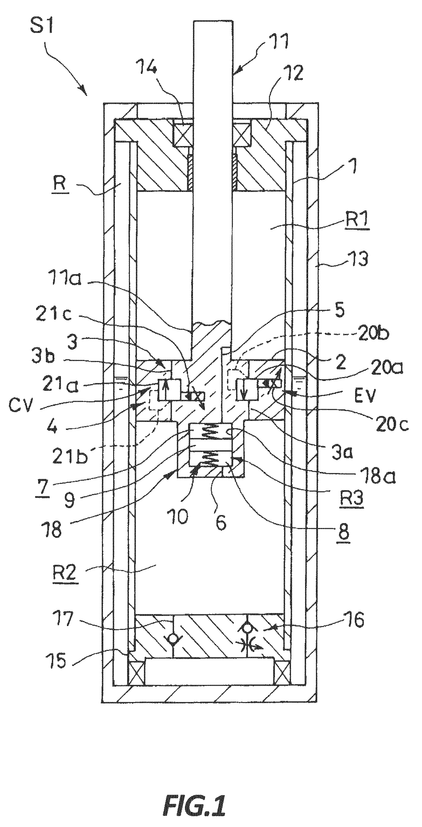

Referring to FIG. 1, a shock absorber S1 includes a cylinder 1, a piston 2 slidably inserted into the cylinder 1 to partition the inside of the cylinder 1 into an expansion-side chamber R1 and a contraction-side chamber R2, a piston rod 11 movably inserted into the cylinder 1 and connected to the piston 2, a damping passage 3 that causes the expansion-side chamber R1 and the contraction-side chamber R2 to communicate with each other, a pressure chamber R3 communicating with the expansion-side chamber R1 and the contraction-side chamber R2, a free piston 9 movably inserted into the pressure chamber R3 to partition the pressure chamber R3 into an expansion-side pressure chamber 7 communicating with the expansion-side chamber R1 and a contraction-side pressure chamber 8 communicating with the contraction-side chamber R2, a spring element 10 that positions the free piston 9 in a neutral position with respect to the pressure chamber R3 and generates a biasing force for suppressing a displacement of the free piston 9 from the neutral position, and a damping force control unit 4 provided in the damping passage 3 to change resistance to a flow of hydraulic oil as a hydraulic fluid passing therethrough.

The piston rod 11 has one end 11a connected to the piston 2 and the other end protruding outward while its shaft is slidably supported by an annular rod guide 12 that seals the upper end of the cylinder 1.

The shock absorber S1 further has an outer tube 13 provided to cover an outer circumference of the cylinder 1 and form a reservoir R for storing the hydraulic oil in conjunction with the cylinder 1. The upper end of the outer tube 13 is sealed by the rod guide 12.

The expansion-side chamber R1, the contraction-side chamber R2, and the pressure chamber R3 are filled with the hydraulic oil. In addition, a gas is filled in the reservoir R in addition to the hydraulic oil. A gap between the piston rod 11 and the cylinder 1 is sealed by a seal member 14 so that the inside of the cylinder 1 has a liquid tight state. It is noted that a liquid such as water or an aqueous solution other than the hydraulic oil may also be used as the hydraulic fluid.

A valve casing 15 is fitted to the lower end of the cylinder 1 in FIG 1. The valve casing 15 has a base valve 16 that allows only a flow of hydraulic oil directed from the contraction-side chamber R2 to the reservoir R and generates resistance to the flow of hydraulic oil and a charge passage 17 that allows only a flow of hydraulic oil directed from the reservoir R to the contraction-side chamber R2. It is noted that, although the base valve 16 is a variable throttle valve, any valve capable of acting as a damping valve such as a throttle valve or a leaf valve may also be employed.

The shock absorber S1 is interposed between a vehicle chassis and a vehicle wheel to exert a damping force for suppressing a vibration between the vehicle chassis and the vehicle wheel, for example, by installing an upper end of the piston rod 11 in FIG. 1 to the vehicle chassis and installing a lower end of the outer tube 13 in FIG. 1 to an axle or the like that supports the vehicle wheel. It is noted that, naturally, the piston rod 11 may also be installed to the axle, and the outer tube 13 may also be installed to the chassis.

In this manner, the shock absorber S1 is interposed between the chassis and the axle to suppress a vibration of the vehicle chassis by using the damping force generated in an expanding or contracting motion. It is noted that the expansion-side chamber R1 is a chamber pressurized when the chassis and the axle recede from each other, and the shock absorber S1 makes an expanding motion. In addition, the contraction-side chamber R2 is a chamber pressurized when the chassis and the axle approach each other, and the shock absorber S1 make a contracting motion.

The shock absorber S1 according to this embodiment is a single-rod type shock absorber in which the piston rod 11 is inserted into only the expansion-side chamber R1. For this reason, the shock absorber S1 is a twin-tube shock absorber that compensates for a volume by exchanging excessive or deficient hydraulic oil inside the cylinder 1 with the reservoir R by using the base valve 16 or the charge passage 17 as the piston rod 11 accesses the cylinder 1.

Alternatively, a mono-tube shock absorber may also be employed as the shock absorber S1 by providing, instead of the valve casing 15, a slidable and movable partitioning wall in the lower side of the cylinder 1 such that it makes sliding contact with the inner circumference of the cylinder 1 to form a gas chamber in the lower side of the contraction-side chamber R2. In this case, the volume of the piston rod 11 accessing the inside of the cylinder 1 in an expanding or contracting motion of the shock absorber S1 is compensated for by a vertical movement of the slidable partitioning wall inside the cylinder 1, caused by the expanding or contracting gas volume inside the gas chamber.

Alternatively, the reservoir R may also be formed by providing a separate tank and formed in the tank, instead of the outer tube 13 provided to form the reservoir R in conjunction with the cylinder 1. Furthermore, the shock absorber S1 may be a double-rod type instead of the single-rod type.

The piston 2 is provided with a damping passage 3 that causes the expansion-side chamber R1 and the contraction-side chamber R2 to communicate with each other. The damping passage 3 includes an expansion-side damping passage 3a and a contraction-side damping passage 3b that cause the expansion-side chamber R1 and the contraction-side chamber R2 to communicate in parallel.

The expansion-side damping passage 3a is provided with an expansion-side damping force control valve EV that can change resistance to a flow of hydraulic oil directed from the expansion-side chamber R1 to the contraction-side chamber R2. The contraction-side damping passage 3b is provided with a contraction-side damping force control valve CV that can change resistance to a flow of hydraulic oil directed from the contraction-side chamber R2 to the expansion-side chamber R1. The damping force control unit 4 includes the expansion-side damping force control valve EV and the contraction-side damping force control valve CV.

The expansion-side damping force control valve EV includes a valve body 20a provided in the middle of the expansion-side damping passage 3a, a pilot passage 20b that applies a pressure of the expansion-side chamber R1 in the upstream side of the valve body 20a to the valve body 20a to press the valve body 20a to a valve open direction, and a presser 20c that exerts a pressing force for pressing the valve body 20a to a valve close direction in a variable manner.

The presser 20c controls the back pressure for pressing the valve body 20a to the valve close direction by using a solenoid. Therefore, it is possible to control the valve open pressure of the expansion-side damping force control valve EV by changing the electric current amount supplied to the solenoid from the outside so as to change the back pressure.

According to this embodiment, the expansion-side damping force control valve EV is a hydraulic pilot type solenoid relief valve. However, the presser 20c may be configured to press the valve body 20a by using only an actuator such as a solenoid instead of the configuration of controlling the back pressure applied to the valve body 20a by using a solenoid. In addition, the pressing force for pressing the valve body 20a may be changed depending on the supplied electric current amount or voltage. Therefore, the expansion-side damping force control valve EV may be, for example, a proportional solenoid relief valve (solenoid valve) that controls the valve open pressure by using an actuating force of a solenoid.

Similar to the expansion-side damping force control valve EV, the contraction-side damping force control valve CV includes a valve body 21a provided in the middle of the contraction-side damping passage 3b, a pilot passage 21b that applies the pressure of the contraction-side chamber R2 in the upstream side of the valve body 21a to the valve body 21a to press the valve body 21a to a valve open direction, and a presser 21c that exerts a pressing force of pressing the valve body 21a to a valve close direction in a variable manner, so that the contraction-side damping force control valve CV acts as a hydraulic pilot type solenoid relief valve. Similarly, the contraction-side damping force control valve CV may also be a proportional solenoid relief valve (solenoid valve).

When the shock absorber S1 makes an expanding motion, the piston 2 moves upward in FIG. 1 to pressurize the expansion-side chamber R1, so that the hydraulic oil of the expansion-side chamber R1 moves to the contraction-side chamber R2 through the expansion-side damping passage 3a. In addition, for an expanding motion, the piston rod 11 is extracted from the inside of the cylinder 1. Therefore, the hydraulic oil becomes short as much as the volume of the rod receding from the inside of the cylinder 1, and the short amount of hydraulic oil is supplied from the reservoir R to the cylinder 1 through the charge passage 17.

In the shock absorber S1, the expansion-side damping force control valve EV generates resistance to the flow of hydraulic oil passing through the expansion-side damping passage 3a. As a result, the pressure of the expansion-side chamber R1 increases to exert an expansion-side damping force for suppressing an expanding motion.

When the shock absorber S1 makes a contracting motion, the piston 2 moves downward to pressurize the contraction-side chamber R2, so that the hydraulic oil of the contraction-side chamber R2 flows to the expansion-side chamber R1 through the contraction-side damping passage 3b. In addition, for a contracting motion, the piston rod 11 intrudes to the inside of the cylinder 1. Therefore, the hydraulic oil corresponding to the volume of the rod intruding to the inside of the cylinder 1 becomes excessive. The excessive amount of the hydraulic oil is extruded from the cylinder 1 and is discharged to the reservoir R through the base valve 16.

In the shock absorber S1, the contraction-side damping force control valve CV generates resistance to the flow of hydraulic oil passing through the contraction-side damping passage 3b, and the base valve 16 generates resistance to the flow of hydraulic oil passing through the base valve 16. As a result, the pressure of the contraction-side chamber R2 increases, and a pressure difference is generated between the contraction-side chamber R2 and the expansion-side chamber R1 so as to exert a contraction-side damping force for suppressing a contracting motion.

According to this embodiment, the pressure chamber R3 is formed by a cavity portion 18a. The cavity portion 18a is provided in the housing 18. The housing 18 faces the contraction-side chamber R2 and is connected to the lower part of the piston 2. The inside of the pressure chamber R3 is partitioned by the free piston 9 making sliding contact with the side wall of the cavity portion 18a into an expansion-side pressure chamber 7 shown in the upper half of FIG. 1 and a contraction-side pressure chamber 8 shown in the lower half of FIG. 1.

The free piston 9 can make sliding contact inside the cavity portion 18a in an axial direction corresponding to a vertical direction of FIG. 1. That is, the free piston 9 is slidably inserted into the housing 18 to make a displacement in an axial direction with respect to the housing 18.

The free piston 9 is interposed between a pair of spring elements 10 housed in the expansion-side pressure chamber 7 and the contraction-side pressure chamber 8. As a result, the free piston 9 is positioned in a predetermined location (hereinafter, referred to as a "neutral position") inside the pressure chamber R3. In addition, as the free piston 9 is displaced from the neutral position, a biasing force proportional to the displacement amount is exerted from the spring element 10 so that the free piston 9 is biased toward the neutral position.

The neutral position of the free piston 9 is a position of the free piston 9 determined by the spring elements 10 with respect to the pressure chamber R3. Therefore, the neutral position may not be necessarily set to a center of the pressure chamber R3. That is, the neutral position may not be necessarily set to a vertical center of the cavity portion 18a. In addition, the spring elements 10 may be formed of an elastic body such as rubber other than springs such as a coil spring, a disc spring, and a conical spring as long as it can bias the free piston 9.

The internal space of the housing 18 is partitioned vertically by the free piston 9 into the expansion-side pressure chamber 7 and the contraction-side pressure chamber 8. That is, a vibration suppression direction of the shock absorber S1, caused by the expanding or contracting motion matches a movement direction of the free piston 9.

As the shock absorber S1 is entirely vibrated in a vertical direction of FIG. 1, a vertical vibration may be generated in the free piston 9 with respect to the housing 18. In order to avoid this vibration, the movement direction of the free piston 9 may be set to be perpendicular to the expanding or contracting direction of the shock absorber S1, that is, the left-right direction of FIG. 1, and the expansion-side pressure chamber 7 and the contraction-side pressure chamber 8 may also be arranged horizontally in FIG. 1.

The housing 18 is provided with a contraction-side flow passage 6 for causing the contraction-side chamber R2 and the contraction-side pressure chamber 8 to communicate with each other. In addition, the expansion-side chamber R1 and the expansion-side pressure chamber 7 communicate with each other through the expansion-side flow passage 5 opened from the side portion of the piston rod 11 facing the expansion-side chamber R1 and penetrating through the piston 2 and the housing 18.

In this manner, the expansion-side chamber R1 and the expansion-side pressure chamber 7 communicate with each other through the expansion-side flow passage 5, and the contraction-side chamber R2 and the contracting-side pressure chamber 8 communicate with each other through the contraction-side flow passage 6. In addition, the volume of the expansion-side pressure chamber 7 and the volume of the contraction-side pressure chamber 8 are changed depending on a displacement of the free piston 9 inside the housing 18.

For this reason, in the shock absorber S1, as the free piston 9 moves inside the pressure chamber R3, the hydraulic oil can be exchanged between the expansion-side chamber R1 and the contraction-side chamber R2 through the expansion-side flow passage 5, the expansion-side pressure chamber 7, the contraction-side pressure chamber 8, and the contraction-side flow passage 6. As a result, the expansion-side flow passage 5, the expansion-side pressure chamber 7, the contracting-side pressure chamber 8, and the contraction-side flow passage 6 apparently constitute a flow passage for causing the expansion-side chamber R1 and the contraction-side chamber R2 to communicate with each other. That is, the expansion-side chamber R1 and the contraction-side chamber R2 also communicate with each other through this apparent flow passage in addition to the expansion-side damping passage 3a and the contraction-side damping passage 3b of the damping passage 3.

It is noted that the expansion-side flow passage 5 or the contraction-side flow passage 6 may be provided with an orifice or a valve for generating resistance to the flow of hydraulic oil passing therethrough. As a result, it is possible to control a movement characteristic of the free piston 9 for a pressure difference between the expansion-side chamber R1 and the contraction-side chamber R2 or a movement characteristic for an alternating frequency of this pressure difference.

Alternatively, the expansion-side flow passage 5 or the contraction-side flow passage 6 may also be provided with a variable orifice capable of reducing an opening area depending on the displacement of the free piston 9 from the neutral position. As a result, it is possible to reduce a displacement rate of the free piston 9 as the free piston 9 approaches both stroke ends and prevent a striking sound that may be generated when the free piston 9 violently collides with the housing 18.

Subsequently, a description will be made for the operation of the shock absorber S1.

As the shock absorber S1 makes an expanding motion in which the piston 2 moves upward in FIG. 1 with respect to the cylinder 1, the expansion-side chamber R1 is contracted by the piston 2, and the contraction-side chamber R2 is expanded. For this reason, the pressure of the expansion-side chamber R1 increases, and the pressure of the contraction-side chamber R2 decreases, so that a pressure difference is generated therebetween. As a result, the hydraulic oil of the expansion-side chamber R1 moves to the contraction-side chamber R2 through the expansion-side damping passage 3a.

The increasing pressure of the expansion-side chamber R1 propagates to the expansion-side pressure chamber 7 through the expansion-side flow passage 5. As a result, the free piston 9 moves downward in FIG. 1 inside the pressure chamber R3, so that the hydraulic oil of the expansion-side chamber R1 flows to the expansion-side pressure chamber 7. In addition, the hydraulic oil of the contracting-side pressure chamber 8 is pushed to the contraction-side chamber R2 through the contraction-side flow passage 6 by virtue of the downward movement of the free piston 9. Therefore, the hydraulic oil of the expansion-side chamber R1 apparently moves to the contraction-side chamber R2 through the pressure chamber R3 as well as the expansion-side damping passage 3a.

As the shock absorber S1 makes a contracting motion in which the piston 2 moves downward in FIG. 1 with respect to the cylinder 1, the contraction-side chamber R2 is contracted by the piston 2, and the expansion-side chamber R1 is expanded. For this reason, the pressure of the contraction-side chamber R2 increases, and the pressure of the expansion-side chamber R1 decreases, so that a pressure difference is generated therebetween. As a result, the hydraulic oil of the contraction-side chamber R2 moves to the expansion-side chamber R1 through the contraction-side damping passage 3b and further moves to the reservoir R through the base valve 16.

The increasing pressure of the contraction-side chamber R2 propagates to the contracting-side pressure chamber 8 through the contraction-side flow passage 6. As a result, the free piston 9 moves upward in FIG. 1 inside the pressure chamber R3, and the hydraulic oil of the contraction-side chamber R2 flows to the contracting-side pressure chamber 8. In addition, the hydraulic oil of the expansion-side pressure chamber 7 is pushed to the expansion-side chamber R1 through the expansion-side flow passage 5 by virtue of the upward movement of the free piston 9. Therefore, the hydraulic oil of the contraction-side chamber R2 apparently moves to the expansion-side chamber R1 through the pressure chamber 3 as well as the contraction-side damping passage 3b.

Here, if the piston has the same speed in the expanding motion of the shock absorber S1 even when a frequency of the vibration input to the shock absorber S1, that is, a frequency of the vibration of the expanding/contracting motion of the shock absorber S1 is either a low frequency or a high frequency, an amplitude of the shock absorber S1 for a low-frequency vibration input is larger than an amplitude of the shock absorber S1 for a high-frequency vibration input.

In this manner, when the vibration input to the shock absorber S1 has a low frequency, the amplitude of the shock absorber S1 is large. Therefore, a flow rate of hydraulic oil directed from the expansion-side chamber R1 to the contraction-side chamber R2 or directed from the contraction-side chamber R2 to the expansion-side chamber R1 increases. In addition, a displacement of the free piston 9 also increases approximately in proportion to this flow rate.

According to this embodiment, the free piston 9 is biased by the spring element 10. For this reason, as the displacement of the free piston 9 increases, the biasing force received by the free piston 9 from the spring element 10 also increases. Accordingly, a pressure difference is generated between the expansion-side pressure chamber 7 and the contraction-side pressure chamber 8, so that the pressure difference between the expansion-side chamber R1 and the expansion-side pressure chamber 7 and the pressure difference between the contraction-side pressure chamber 8 and the contraction-side chamber R2 are reduced. Therefore, an apparent flow rate of hydraulic oil exchanged between the expansion-side chamber R1 and the contraction-side chamber R2 through the pressure chamber R3 is reduced, and the flow rate of the expansion-side damping passage 3a or the contraction-side damping passage 3b increases accordingly as much as the reduced apparent flow rate.

In this manner, when a low-frequency vibration is input, the flow rate of the expansion-side damping passage 3a or the contraction-side damping passage 3b increases. Therefore, out of the damping forces generated in the shock absorber S1, the damping force generated by the damping force control unit 4 becomes dominant. As a result, it is possible to control the damping force generated in the shock absorber S1 by controlling resistance to the flow of hydraulic oil generated by the damping force control unit 4.

When a high-frequency vibration is input to the shock absorber S1, the amplitude is smaller than that of a low-frequency vibration input. Therefore, the flow rate of hydraulic oil directed from the expansion-side chamber R1 to the contraction-side chamber R2 or directed from the contraction-side chamber R2 to the expansion-side chamber R1 is reduced, and the displacement of the expansion-side free piston 9 is also reduced. Then, the biasing force received by the free piston 9 from the spring element 10 is reduced accordingly. For this reason, the pressure of the expansion-side pressure chamber 7 is approximately equalized with the pressure of the contracting-side pressure chamber 8, so that the pressure difference between the expansion-side chamber R1 and the expansion-side pressure chamber 7 and the pressure difference between the contraction-side chamber R2 and the contraction-side pressure chamber 8 increase, compared to a low-frequency vibration input. Therefore, an apparent flow rate of hydraulic oil exchanged between the expansion-side chamber R1 and the contraction-side chamber R2 through the pressure chamber R3 increases, compared to a low-frequency vibration input. Accordingly, the flow rate of the expansion-side damping passage 3a or the contraction-side damping passage 3b decreases as much as the increasing apparent flow rate, so that the damping force generated in the shock absorber S1 is reduced.

In this manner, when the input vibration frequency of the shock absorber S1 increases, the damping force can be reduced. As a result, for a low-frequency vibration input corresponding to a resonance frequency band of a sprung member of a vehicle, a posture of the vehicle is stabilized by generating a strong damping force, so that it is possible to prevent a passenger from having an uncomfortable feeling during a vehicle turn. In addition, for a high-frequency vibration input corresponding to a resonance frequency band of a unsprung member of a vehicle, a vibration of the wheel side (unsprung member side) is insulated from the chassis side (sprung member side) by generating a weak damping force, so that it is possible to provide an excellent ride quality of the vehicle.

As described above, in the shock absorber S1, the damping force can be controlled by controlling resistance to the flow of hydraulic oil generated by the damping force control unit 4. That is, in the shock absorber S1, while a damping force can be controlled by the damping force control unit 4, the damping force can be reduced for a high-frequency vibration input.

Therefore, in the shock absorber S1, it is possible to absorb a vibration of a chassis by controlling a damping force by using the damping force control unit 4 for a relatively low-frequency vibration. In addition, for a high-frequency vibration that may be difficult to suppress by using the damping force control unit 4, it is possible to mechanically exert a weak damping force to insulate a vibration of a wheel side. Therefore, it is possible to effectively suppress a vibration of a chassis. As a result, it is possible to remarkably improve a ride quality of a vehicle.

The free piston 9 is biased by the spring elements 10 to the neutral position, and is returned to the neutral position even when it is displaced. Therefore, it is possible to prevent degradation of a damping force attenuation effect that may be generated when the free piston 9 stops at the stroke end, and the shock absorber S1 receives a high-frequency vibration input.

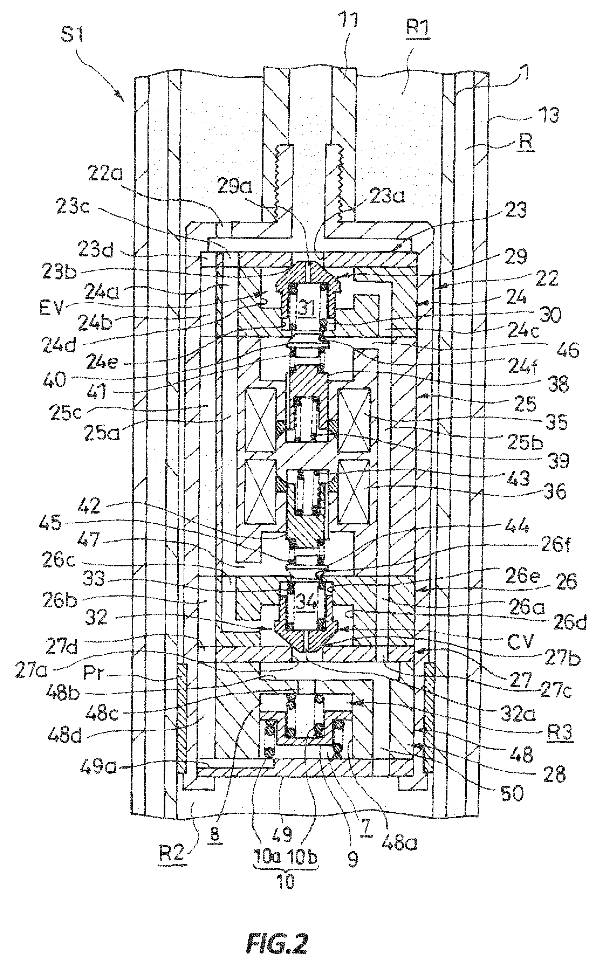

Specifically, in order to provide the expansion-side damping force control valve EV, the contraction-side damping force control valve CV, and the pressure chamber R3 in the shock absorber S1, for example, the piston 22 may be formed in a tubular shape to internally house the expansion-side damping force control valve EV, the contraction-side damping force control valve CV, and the pressure chamber R3 as illustrated in FIG. 2.

A piston ring Pr making sliding contact with an inner circumference of the cylinder 1 is installed to an outer circumference of the piston 22. The piston 22 partitions the inside of the cylinder 1 into the expansion-side chamber R1 and the contraction-side chamber R2.

An expansion-side valve seat member 23, an expansion-side valve body holder 24, a solenoid holder 25 that houses pressers of the expansion-side damping force control valve EV and the contraction-side damping force control valve CV, a contraction-side valve body holder 26, a contraction-side valve seat member 27, and a housing 28 for forming the pressure chamber R3 are housed in the piston 22 sequentially from the upside in FIG. 2.

The expansion-side valve seat member 23 having a plate shape is provided with a hole 23a formed in the center and an annular valve seat 23b formed in the edge of the lower end of the hole 23a in FIG. 2. In addition, the expansion-side valve seat member 23 has a vertically perforated through-hole 23c and a cutout trench 23d provided in the outer circumference.

The expansion-side valve body holder 24 having a tubular shape internally houses a valve body 29 of the expansion-side damping force control valve EV and a spring 30 that biases the valve body 29. As the expansion-side valve body holder 24 is stacked on the expansion-side valve seat member 23, the valve body 29 is pressed by the spring 30 toward the annular valve seat 23b.

The expansion-side valve body holder 24 has a through-hole 24a communicating with the through-hole 23c of the expansion-side valve seat member 23, a cutout trench 24b provided in the outer circumference to communicate with the cutout trench 23d of the expansion-side valve seat member 23, and a passage 24c opened from the lower end in FIG. 2 to communicate with the inner circumference.

The expansion-side valve body holder 24 has an inner circumference narrowed in two steps downward in FIG. 2 to form a large diameter portion 24d, a middle diameter portion 24e, and a small diameter portion 24f. The passage 24c communicates with the large diameter portion 24d.

A front end of the valve body 29 is a poppet type, and its maximum diameter is larger than the diameter of the hole 23a. As the valve body 29 is seated on the annular valve seat 23b, the hole 23a is blocked.

A rear end of the valve body 29 has a tubular shape, and its outer circumference makes sliding contact with the inner circumference of the middle diameter portion 24e of the expansion-side valve body holder 24. As a result, the valve body 29 is guided by the expansion-side valve body holder 24 so as to move without an axial vibration in a vertical direction of FIG. 2.

The spring 30 is inserted into the rear end of the valve body 29. The spring 30 is interposed between the valve body 29 and the step portion between the small diameter portion 24f and middle diameter portion 24e of the expansion-side valve body holder 24 so as to bias the valve body 29 toward the expansion-side valve seat member 23. In this manner, as the valve body 29 is assembled to the expansion-side valve body holder 24, a back-pressure chamber 31 is formed by the valve body 29 and the expansion-side valve body holder 24 in the back side of the valve body 29, that is, the lower side of FIG. 2.

The piston 22 has a penetrating hole 22a that causes the expansion-side chamber R1 to communicate with the hole 23a, the through-hole 23c, and the cutout trench 23d. As a result, the pressure of the expansion-side chamber R1 is applied to the valve body 29 to be pressed downward in FIG. 2 such that the valve body 29 recedes from the annular valve seat 23b against the spring 30.

The back-pressure chamber 31 communicates with the expansion-side chamber R1 through an orifice 29a provided in the valve body 29. That is, if the force of pressing the valve body 29 downward by virtue of the pressure of the expansion-side chamber R1 is stronger than a resultant force between a force of pressing the valve body 29 upward by virtue of the pressure of the back-pressure chamber 31 and the biasing force of the spring 30, the valve body 29 recedes from the annular valve seat 23b to open the expansion-side damping force control valve EV.

The contraction-side valve seat member 27 stacked beneath the contraction-side valve body holder 26 has a plate shape and is provided with a hole 27a formed in the center and an annular valve seat 27b formed in the edge of the upper end of the hole 27a in FIG. 2. In addition, the contraction-side valve seat member 27 has a vertically perforated through-hole 27c and a cutout trench 27d provided in the outer circumference.

The contraction-side valve body holder 26 having a tubular shape internally houses a valve body 32 of the contraction-side damping force control valve CV and a spring 33 that biases the valve body 32. As the contraction-side valve body holder 26 is stacked on the contraction-side valve seat member 27, the valve body 32 is pressed by the spring 33 toward the annular valve seat 27b.

The contraction-side valve body holder 26 has a through-hole 26a communicating with the through-hole 27c of the contraction-side valve seat member 27, a cutout trench 26b provided in the outer circumference to communicate with the cutout trench 27d of the contraction-side valve seat member 27, and a passage 26c opened from the upper end of FIG. 2 to communicate with the inner circumference.

The contraction-side valve body holder 26 has an inner circumference narrowed in two steps upward in FIG. 2 and is provided with a large diameter portion 26d, a middle diameter portion 26e, and a small diameter portion 26f. The passage 26c communicates with the large diameter portion 26d.

The front end of the valve body 32 is a poppet type, and its maximum diameter is larger than the diameter of the hole 27a. As the valve body 32 is seated on the annular valve seat 27b, the hole 27a is blocked.

The rear end of the valve body 32 has a tubular shape, and its outer circumference makes sliding contact with the inner circumference of the middle diameter portion 26e of the contraction-side valve body holder 26. As a result, the valve body 32 is guided by the contraction-side valve body holder 26 so as to move vertically in FIG. 2 without an axial vibration.

The spring 33 is inserted into the rear end of the valve body 32. The spring 33 is interposed between the valve body 32 and the step portion between the small diameter portion 26f and the middle diameter portion 26e of the contraction-side valve body holder 26 to bias the valve body 32 toward the contraction-side valve seat member 27. In this manner, if the valve body 32 is assembled to the contraction-side valve body holder 26, a back-pressure chamber 34 is formed in the rear surface side of the valve body 32, that is, in the upper side of FIG. 2 by the valve body 32 and the contraction-side valve body holder 26.

The housing 28 stacked beneath the contraction-side valve seat member 27 is provided with a passage 50 for causing the contraction-side chamber R2 to communicate with the hole 27a and the through-hole 27c. As a result, the valve body 32 receives the pressure of the contraction-side chamber R2 such that the valve body 32 recedes from the annular valve seat 27b, that is, pressed upward in FIG. 2 against the spring 33.

The back-pressure chamber 34 communicates with the contraction-side chamber R2 through an orifice 32a provided in the valve body 32. That is, if the force of pressing the valve body 32 upward by virtue of the pressure of the contraction-side chamber R2 is stronger than a resultant force between the force of pressing the valve body 32 downward by virtue of the pressure of the back-pressure chamber 34 and the biasing force of the spring 33, the valve body 32 recedes from the annular valve seat 27b, and the contraction-side damping force control valve CV is opened.

The solenoid holder 25 having a tubular shape internally houses the pressers of the expansion-side damping force control valve EV and the contraction-side damping force control valve CV. In addition, the solenoid holder 25 has vertically perforated through-holes 25a and 25b and a cutout trench 25c provided in the outer circumference.

If the solenoid holder 25 is interposed between the expansion-side valve body holder 24 and the contraction-side valve body holder 26, the through-hole 25a faces and communicates with the through-hole 24a and the passage 26c, the through-hole 25b faces and communicates with the passage 24c and the through-hole 26a, and the cutout trench 25c faces and communicates with the cutout trenches 24b and 26b.

Therefore, the expansion-side damping passage as a part of the damping passage is formed by the penetrating hole 22a, the hole 23a, the passage 24c, the through-hole 25b, the through-hole 26a, the through-hole 27c, and the passage 50. In addition, the contraction-side damping passage as a part of the damping passage is formed by the passage 50, the hole 27a, the passage 26c, the through-hole 25a, the through-hole 24a, the through-hole 23c, and the penetrating hole 22a.

The solenoid holder 25 internally houses a solenoid 35 that controls a valve open pressure of the expansion-side damping force control valve EV, a movable core 38 arranged inside the solenoid 35 and slidably inserted into the inner circumference of the solenoid holder 25, a spring 39 that biases the movable core 38 upward in FIG. 2, a back-pressure control valve 40 seated on or unseated from the inner edge of the lower opening end of the expansion-side valve body holder 24, and a spring 41 interposed between the movable core 38 and the back-pressure control valve 40.

Furthermore, the solenoid holder 25 internally houses a solenoid 36 that controls a valve open pressure of the contraction-side damping force control valve CV, a movable core 42 arranged inside the solenoid 36 and slidably inserted into the solenoid holder 25, a spring 43 that biases the movable core 42 downward in FIG. 2, a back-pressure control valve 44 seated on or unseated from the inner edge of the lower opening end of the contraction-side valve body holder 26, and a spring 45 interposed between the movable core 42 and the back-pressure control valve 44.

A level of the biasing force applied from the springs 39 and 41 to the back-pressure control valve 40 can change by controlling a downward attraction force of the movable core 38 in FIG. 2 by applying an electric current to the solenoid 35.

While the back-pressure control valve 40 is seated on the opening end of the expansion-side valve body holder 24, the back-pressure chamber 31 is closed, and the valve body 29 remains in the seated state on the annular valve seat 23b. The back-pressure chamber 31 communicates with the expansion-side chamber R1 through the orifice 29a, so that the pressure of the expansion-side chamber R1 propagates while it is reduced. In addition, as the back-pressure control valve 40 is pressed by the pressure of the back-pressure chamber 31 and is opened, the pressure of the back-pressure chamber 31 is controlled to the valve open pressure of the back-pressure control valve 40.

Therefore, by controlling the electric current amount supplied to the solenoid 35, the valve open pressure of the back-pressure control valve 40 is controlled, so that the pressure of the back-pressure chamber 31 is controlled accordingly. In this manner, the presser of the expansion-side damping force control valve EV comprises the solenoid 35, the movable core 38, the spring 39, 41, the back-pressure control valve 40, the back-pressure chamber 31, and the orifice 29a.

The valve body 29 is opened when the force of separating the valve body 29 from the annular valve seat 23b by virtue of the pressure of the expansion-side chamber R1 is stronger than a resultant force between the force of pressing the valve body 29 toward the annular valve seat 23b by virtue of the pressure of the back-pressure chamber 31 and the biasing force of the spring 30.

Therefore, the valve open pressure of the valve body 29 of the expansion-side damping force control valve EV can be controlled by controlling the electric current amount supplied to the solenoid 35. The hydraulic oil passing through the back-pressure control valve 40 is discharged to the contraction-side chamber R2 from the downstream side of the expansion-side damping passage with respect to the valve body 29 through a discharge port 46 communicating with the through-hole 25b.

By controlling the upward attraction force of the movable core 42 in FIG. 2 by applying an electric current to the solenoid 36, it is possible to change a level of the biasing force applied from the springs 43 and 45 to the back-pressure control valve 44.

While the back-pressure control valve 44 is seated on the opening end of the contraction-side valve body holder 26, the back-pressure chamber 34 is closed, and the valve body 32 remains in the seated state on the annular valve seat 27b. The back-pressure chamber 34 communicates with the contraction-side chamber R2 through the orifice 32a, so that the pressure of the contraction-side chamber R2 propagates while it is reduced. In addition, as the back-pressure control valve 44 is pressed by the pressure of the back-pressure chamber 34 and is opened, the pressure of the back-pressure chamber 34 is controlled to the valve open pressure of the back-pressure control valve 44.

Therefore, by controlling the electric current amount supplied to the solenoid 36, the valve open pressure of the back-pressure control valve 44 is controlled, so that the pressure of the back-pressure chamber 34 is controlled accordingly. In this manner, the presser of the contraction-side damping force control valve CV comprises the solenoid 36, the movable core 42, the springs 43 and 45, the back-pressure control valve 44, the back-pressure chamber 34, and the orifice 32a.

The valve body 32 is opened when the force of separating the valve body 32 from the annular valve seat 27b by virtue of the pressure of the contraction-side chamber R2 is stronger than a resultant force between the force of pressing the valve body 32 toward the annular valve seat 27b by virtue of the pressure of the back-pressure chamber 34 and the biasing force of the spring 33.

Therefore, the valve open pressure of the valve body 32 of the contraction-side damping force control valve CV can be controlled by controlling the electric current amount supplied to the solenoid 36. The hydraulic oil passing through the back-pressure control valve 44 is discharged to the expansion-side chamber R1 from the downstream side of the contraction-side damping passage with respect to the valve body 32 through a discharge port 47 communicating with the through-hole 25a.

A housing 28 for forming the pressure chamber R3 is stacked beneath the contraction-side valve seat member 27 and is housed in the piston 22. The housing 28 includes a housing body 48 provided with a cavity portion 48a opened from the lower end and a cap 49 stacked on the housing body 48 to block the lower opening end of the cavity portion 48a.

The housing body 48 has a concave portion 48b provided in the upper end side in FIG. 2 and a passage 48c opened from the bottom of the concave portion 48b to communicate with the cavity portion 48a. In addition, a passage 50 opened from the lower end of the cap 49 in FIG. 2 and communicating with the concave portion 48b is provided.

The concave portion 48b faces the through-hole 27c and the hole 27a of the contraction-side valve seat member 27, so that the contraction-side chamber R2 communicates with the hole 27a and the through-hole 27c through the passage 50.

A cutout trench 48d is provided vertically in the outer circumference of the housing body 48, and a cutout trench 49a communicating with the cavity portion 48a is provided in the upper end of the cap 49 in FIG. 2 along a radial direction from the outer circumference. The cutout trenches 48d and 49a communicate with each other.

The cutout trench 48d faces and communicates with the cutout trench 27d provided in the contraction-side valve seat member 27. In addition, the cutout trench 48d communicates with the expansion-side chamber R1 through the cutout trenches 26b, 25c, 24b, and 23d and the penetrating hole 22a. The cavity portion 48a communicates with the contraction-side chamber R2 through the passage 48c, the concave portion 48b, and the passage 50.

The cavity portion 48a of the housing 28 forms the pressure chamber R3. The free piston 9 is slidably inserted into the pressure chamber R3 in a vertical direction in FIG. 2. As a result, the inside of the pressure chamber R3 is partitioned into an expansion-side pressure chamber 7 underlying the free piston 9 in FIG. 2 and communicating with the expansion-side chamber R1 and a contraction-side pressure chamber 8 overlying the free piston 9 in FIG. 2 and communicating with the contraction-side chamber R2.

The free piston 9 is biased by the spring element 10. The spring element 10 includes a spring 10a interposed between the cap 49 and the free piston 9 and a spring 10b interposed between the inner wall of the cavity portion 48a and the free piston 9.

The spring element 10 positions the free piston 9 in a neutral position inside the pressure chamber R3 and biases the free piston 9 so as to return to the neutral position when it is displaced from the neutral position.

The expansion-side valve seat member 23, the expansion-side valve body holder 24, the solenoid holder 25, the contraction-side valve body holder 26, the contraction-side valve seat member 27, and the housing 28 are stacked and housed inside the piston 22 after the aforementioned members are assembled. In addition, the lower end of the piston 22 in FIG. 2 is caulked to fix the expansion-side valve seat member 23, the expansion-side valve body holder 24, the solenoid holder 25, the contraction-side valve body holder 26, the contraction-side valve seat member 27, and the housing 28 to the piston 22.

As a result, it is possible to form the expansion-side damping passage, the expansion-side damping force control valve EV, the contraction-side damping passage, and the contraction-side damping force control valve CV and control both the expansion-side damping force and the contraction-side damping force generated by the shock absorber S1.

As the free piston 9 housed in the pressure chamber R3 moves vertically, the hydraulic oil is exchanged between the expansion-side chamber R1 and the contraction-side chamber R2 through the apparent flow passage.

In the configuration described above, it is possible to assemble the damping force control unit including the expansion-side damping force control valve EV and the contraction-side damping force control valve CV, the pressure chamber R3, and the free piston 9 to the shock absorber S1.

Therefore, in the specific shock absorber S1, it is possible to absorb a vibration of a chassis by controlling a damping force by using the damping force control unit for a relatively low-frequency vibration. In addition, for a high-frequency vibration that may be difficult to suppress by using the damping force control unit, it is possible to mechanically exert a weak damping force to insulate a vibration of a wheel side. Therefore, it is possible to effectively suppress a vibration of a chassis. As a result, it is possible to remarkably improve a ride quality of a vehicle.

### <Second Embodiment>

A description will now be made for a shock absorber S2 according to a second embodiment of this invention.

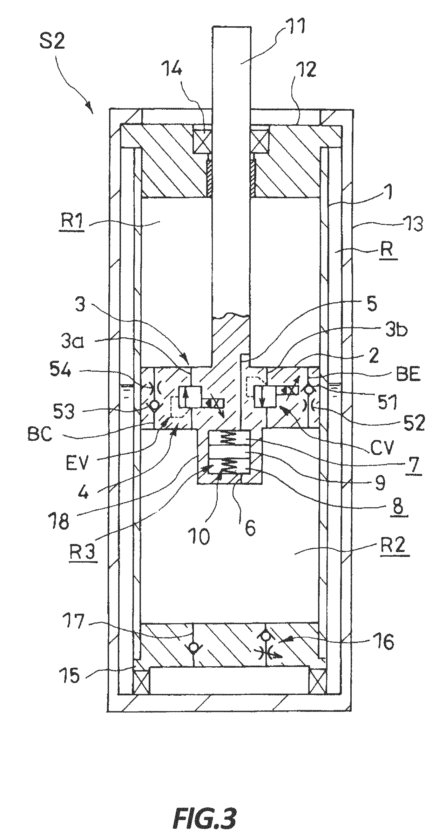

Referring to FIG. 3, the shock absorber S2 includes, in addition to the configuration of the shock absorber S1, an expansion-side bypass passage BE and a contraction-side bypass passage BC provided in parallel with the damping passage 3 to cause the expansion-side chamber R1 and the contraction-side chamber R2 to communicate with each other, an expansion-side check valve 51 provided in the expansion-side bypass passage BE to allow only a flow of hydraulic oil directed from the expansion-side chamber R1 to the contraction-side chamber R2, an expansion-side orifice 52 provided in the expansion-side bypass passage BE to generate resistance to the flow of hydraulic oil, a contraction-side check valve 53 provided in the contraction-side bypass passage BC to allow only a flow of hydraulic oil directed from the contraction-side chamber R2 to the expansion-side chamber R1, and a contraction-side orifice 54 provided in the contraction-side bypass passage BC to generate resistance to the flow of hydraulic oil.

As a result, it is possible to improve freedom in tuning of the expansion-side damping force and the contraction-side damping force of the shock absorber S2 when the expansion/contraction rate is low.

By providing the expansion-side bypass passage BE, the expansion-side check valve 51, and the expansion-side orifice 52, it is possible to improve freedom in tuning of the expansion-side damping force of the shock absorber S2. By providing the contraction-side bypass passage BC, the contraction-side check valve 53, and the contraction-side orifice 54, it is possible to improve freedom in tuning of the contraction-side damping force of the shock absorber S2.

Therefore, in order to improve freedom in tuning of the expansion-side damping force, only the expansion-side bypass passage BE, the expansion-side check valve 51, and the expansion-side orifice 52 may be provided. Similarly, in order to improve freedom in tuning of the contraction-side damping force, only the contraction-side bypass passage BC, the contraction-side check valve 53, and the contraction-side orifice 54 may be provided.

### <Third Embodiment>

A description will now be made for a shock absorber S3 according to a third embodiment of this invention.

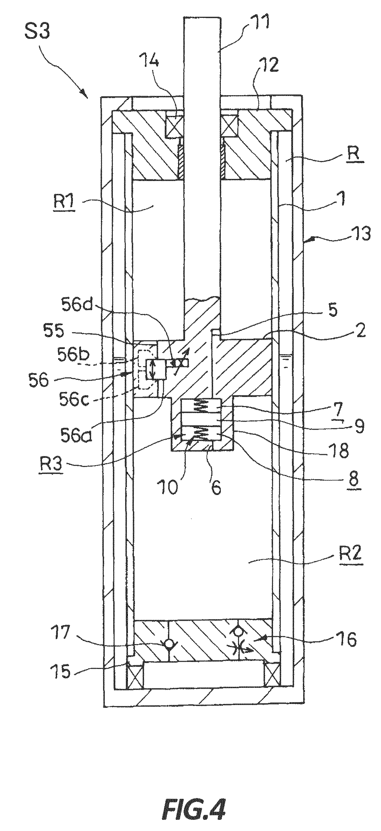

Referring to FIG. 4, the shock absorber S3 has a damping force control unit 56 instead of the damping force control unit 4 of the shock absorber S1. The damping force control unit 56 is provided with a single pilot solenoid relief valve.

The shock absorber S3 has a single damping passage 55 instead of the damping passage 3 of the shock absorber S1 and a damping force control unit 56 in the middle of the damping passage 55.

The damping force control unit 56 includes a valve body 56a provided in the middle of the damping passage 55, pilot passages 56b and 56c for applying the pressures of both sides of the valve body 56a toward the valve body 56a to press the valve body 56a to a valve open direction, and a presser 56d that exerts a pressing force for pressing the valve body 56a to a valve close direction in a variable manner.

The presser 56d is configured to control the back pressure for pressing the valve body 56a to the valve close direction by using a solenoid. Therefore, by changing the electric current amount supplied from the outside to the solenoid to change the back pressure, it is possible to control the valve open pressure of the damping force control unit 56.

### <Fourth Embodiment>

A description will now be made for a shock absorber S4 according to a fourth embodiment of this invention.

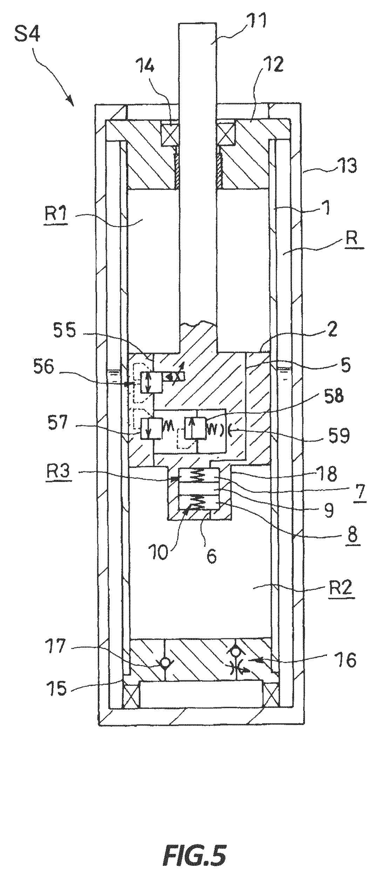

Referring to FIG. 5, the shock absorber S4 includes, in addition to the configuration of the shock absorber S3, an expansion-side subsidiary valve 57 that allows only a flow of hydraulic oil directed from the expansion-side chamber R1 to the contraction-side chamber R2 and generates resistance to the flow of hydraulic oil, and a contraction-side subsidiary valve 58 provided in parallel with the expansion-side subsidiary valve 57 that allows only a flow of hydraulic oil directed from the contraction-side chamber R2 to the expansion-side chamber R1 and generates resistance to the flow of hydraulic oil.

In this case, a characteristic of the expansion-side damping force of the shock absorber S4 becomes a sum of the damping force of the expansion-side subsidiary valve 57 and the variable damping force generated by the damping force control unit 56. Similarly, the characteristic of the contraction-side damping force becomes a sum of the damping force of the contraction-side subsidiary valve 58 and the variable damping force generated by the damping force control unit 56. Therefore, it is possible to improve freedom in tuning of the damping force.

According to this embodiment, a throttle valve 59 is provided in parallel with the expansion-side subsidiary valve 57 and the contraction-side subsidiary valve 58. By providing the throttle valve 59, it is possible to set a damping characteristic of the shock absorber S4 suitable for a vehicle when the piston speed is slow. It is noted that the throttle valve 59 may also be omitted.

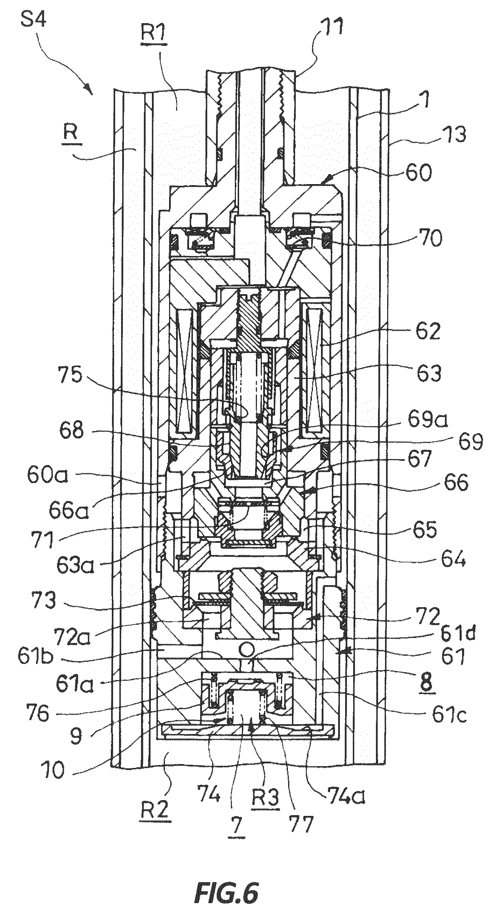

Specifically, the shock absorber S4 is preferably implemented, for example, as illustrated in FIG. 6. Referring to FIG. 6, the shock absorber S4 is provided with a valve housing 60 in the lower end of the piston rod 11 to house the damping force control unit inside the valve housing 60. In addition, the piston 61 is connected to the valve housing 60.

The shock absorber S4 includes a tubular solenoid core 63 provided with a solenoid 62 in its outer circumference, an annular valve disc 64 fitted to the lower end of the solenoid core 63 in FIG. 6, a damping passage 65 that causes the expansion-side chamber R1 and the contraction-side chamber R2 to communicate with each other, a tubular valve body 66 slidably inserted into the solenoid core 63 to open or close the damping passage 65, a pilot passage 67 that causes the expansion-side chamber R1 and the contraction-side chamber R2 to communicate with each other through the valve body 66, an expansion-side pilot valve 68 and a contraction-side pilot valve 69 movably inserted into the valve body 66 to open or close the pilot passage 67, a one-way orifice 70 provided in the middle of the pilot passage 67 to be closer to the expansion-side chamber R1 side relatively to the expansion-side pilot valve 68 and the contraction-side pilot valve 69, and a one-way orifice 71 provided in the middle of the pilot passage 67 to be closer to the contraction-side chamber R2 side relatively to the expansion-side pilot valve 68 and the contraction-side pilot valve 69.

The one-way orifice 70 acts as an orifice for a flow of hydraulic oil directed from the expansion-side chamber R1 to the contraction-side chamber R2 and opens the pilot passage 67 for a reverse flow. The one-way orifice 71 acts as an orifice for a flow of hydraulic oil directed from the contraction-side chamber R2 to the expansion-side chamber R1 and opens the pilot passage 67 for a reverse flow.

These members are housed in the valve housing 60 to form a damping force control unit.

The piston 61 has a tubular cap 61a that partitions the internal space in the middle. The piston 61 is screwed to the inner circumference in the lower end of the valve housing 60, so that the solenoid 62, the solenoid core 63, the valve disc 64, the valve body 66, expansion-side pilot valve 68, the contraction-side pilot valve 69, the one-way orifice 70, and the one-way orifice 71 housed in the valve housing 60 are fixed to the valve housing 60.

The piston 61 is internally provided with a disc 72 having a port 72a. In addition, the port 72a is provided with a double swing type leaf valve 73.

The port 72a communicates with the contraction-side chamber R2 through the hole 61b that extends inward from the lateral side of the piston 61 facing the contraction-side chamber R2 and communicates with the upper side over the cap 61a in FIG. 6. In addition, the port 72a communicates with the expansion-side chamber R1 through a hole 63a provided in the lower side of the solenoid core 63 and a hole 60a provided in a lateral side of the valve housing 60.

Therefore, in this case, the damping passage 65 is formed by the holes 61b, 63a, and 60a and the port 72a. In addition, the damping passage 65 is opened or closed by the valve disc 64 and the valve body 66 that constitute the damping force control unit.

When the hydraulic oil passes through the port 72a from the expansion-side chamber R1 to the contraction-side chamber R2, the inner circumferential side of the leaf valve 73 is deformed downward in FIG. 6 to open the port 72a and generate resistance to the flow of hydraulic oil. In contrast, when the hydraulic oil passes through the port 72a from the contraction-side chamber R2 to the expansion-side chamber R1, the outer circumferential side of the leaf valve 73 is deformed upward in FIG. 6 to open the port 72a and generate resistance to the flow of hydraulic oil.

The leaf valve 73 is provided in series with the damping force control unit provided in the damping passage 65 so as to form a De Carbon valve serving as both the expansion-side subsidiary valve and the contraction-side subsidiary valve. Alternatively, two or more ports may be provided so that one of them serves as the expansion-side subsidiary valve, and the other one serves as the contraction-side subsidiary valve.

The lower opening end of the piston 61 is blocked by a plate 74 so as to form the pressure chamber R3 under the cap 61a inside the piston 61.

The plate 74 is provided with a concave portion 74a communicating with the pressure chamber R3. The concave portion 74a communicates with the passage 61c opened from the lateral side of the piston 61 connected to the expansion-side chamber R1.

The cap 61a is provided with a hole 61d, so that the pressure chamber R3 communicates with the contraction-side chamber R2 through the holes 61d and 61b. Therefore, the pressure chamber R3 communicates with the expansion-side chamber R1 and the contraction-side chamber R2.

The free piston 9 is vertically slidably inserted into the pressure chamber R3. As a result, the pressure chamber R3 is partitioned into the expansion-side pressure chamber 7 underlying the free piston 9 and the contraction-side pressure chamber 8 overlying the free piston 9.

The free piston 9 is biased by the spring element 10 including springs 76 and 77. The free piston 9 is interposed between the springs 76 and 77 housed in the expansion-side pressure chamber 7 and the contraction-side pressure chamber 8.

The spring element 10 positions the free piston 9 in a neutral position inside the pressure chamber R3 and biases the free piston 9 so as to return to the neutral position when it is displaced from the neutral position.

Both the expansion-side pilot valve 68 and the contraction-side pilot valve 69 have a tubular shape. The contraction-side pilot valve 69 is seated on or unseated from the valve seat 66a provided in the inner circumference of the valve body 66 to open or close the pilot passage 67. In addition, the expansion-side pilot valve 68 is seated on or unseated from the valve seat 69a provided in the inner circumference of the contraction-side pilot valve 69 to open or close the pilot passage 67.

The expansion-side pilot valve 68 is opened only for an expanding motion of the shock absorber S4 and is not opened for a contracting motion. The contraction-side pilot valve 69 is opened only for a contracting motion of the shock absorber S4 and is not opened for an expanding motion.

The expansion-side pilot valve 68 and the contraction-side pilot valve 69 are biased by the spring 75 to block the pilot passage 67 at all times. While the pilot passage 67 is blocked, the valve body 66 remains in the seated state on the valve disc 64, and the damping force control unit has a valve close state. In addition, as the expansion-side pilot valve 68 and the contraction-side pilot valve 69 are opened, the pressure of the pilot passage 67 acts as a back pressure for the valve body 66, so that the valve body 66 is biased to a valve close direction.

When the shock absorber S4 makes an expanding motion, if a force of pushing up the valve body 66 by virtue of the pressure of the expansion-side chamber R1 is stronger than the biasing force for biasing the valve body 66 to the valve close direction, the valve body 66 is opened, and the damping passage 65 is opened. When the shock absorber S4 makes a contracting motion, if the force of pushing up the valve body 66 by virtue of the pressure of the contraction-side chamber R2 is stronger than the biasing force for biasing the valve body 66 to the valve close direction, the valve body 66 is opened, and the damping passage 65 is opened.

The expansion-side pilot valve 68 also serves as a movable core attracted by the solenoid 62. The valve open pressure for separating the expansion-side pilot valve 68 from the valve seat 69a can be controlled by electrically conducting the solenoid 62 to attract the expansion-side pilot valve 68 against the biasing force of the spring 75.

The biasing force of the spring 75 and the attractive force of the solenoid 62 are exerted to the contraction-side pilot valve 69 via the expansion-side pilot valve 68. Therefore, the valve open pressure for separating the contraction-side pilot valve 69 from the valve seat 66a can be controlled based on the electric current amount supplied to the solenoid 62.

Therefore, in the shock absorber S4 according to this embodiment, the valve open pressure of the single valve body 66 can be determined by the single solenoid 62 in either an expanding motion or a contracting motion. As a result, it is possible to control both the expansion-side damping force and the contraction-side damping force.

The presser according to this embodiment includes the solenoid 62, the expansion-side pilot valve 68, the spring 75, and the pilot passage 67.

As the free piston 9 housed in the pressure chamber R3 moves vertically, the hydraulic oil is exchanged between the expansion-side chamber R1 and the contraction-side chamber R2 through the apparent flow passage.

In the configuration described above, it is possible to assemble the damping force control unit, the pressure chamber R3, and the free piston 9 to the shock absorber S4.

Therefore, in the specific shock absorber S4, it is possible to absorb a vibration of a chassis by controlling a damping force by using the damping force control unit for a relatively low-frequency vibration. In addition, for a high-frequency vibration that may be difficult to suppress by using the damping force control unit, it is possible to mechanically exert a weak damping force to insulate a vibration of a wheel side. Therefore, it is possible to effectively suppress a vibration of a chassis. As a result, it is possible to remarkably improve a ride quality of a vehicle.

Embodiments of the present invention were described above, but the above embodiments are merely examples of applications of the present invention, and the technical scope of the present invention is not limited to the specific constitutions of the above embodiments.

With respect to the above description, the contents of application No. 2013-231894, with a filing date of November 8, 2013 in Japan, are incorporated herein by reference.

## Claims

1. A shock absorber comprising:
a cylinder in which a hydraulic fluid is sealed;
a piston slidably inserted into the cylinder, the piston partitioning the cylinder into an expansion-side chamber and a contraction-side chamber;
a piston rod movably inserted into the cylinder, the piston rod being connected to the piston;
a damping passage that allows the expansion-side chamber to communicate with the contraction-side chamber;
a pressure chamber that communicates with the expansion-side chamber and the contraction-side chamber;
a free piston movably inserted into the pressure chamber, the free piston partitioning the pressure chamber into an expansion-side pressure chamber communicating with the expansion-side chamber and a contraction-side pressure chamber communicating with the contraction-side chamber;
a spring element configured to position the free piston in a neutral position with respect to the pressure chamber and exert a biasing force for suppressing a displacement of the free piston from the neutral position; and
a damping force control unit provided in the damping passage, the damping force control unit being configured to change resistance to a flow of the hydraulic fluid passing therethrough.

2. The shock absorber according to claim 1, wherein the damping passage includes an expansion-side damping passage and a contraction-side damping passage that allow the expansion-side chamber to communicate with the contraction-side chamber in parallel, and
the damping force control unit includes
an expansion-side damping force control valve provided in the expansion-side damping passage, the expansion-side damping force control valve being configured to change resistance to a flow of the hydraulic fluid directed from the expansion-side chamber to the contraction-side chamber, and
a contraction-side damping force control valve provided in the contraction-side damping passage, the contraction-side damping force control valve being configured to change resistance to a flow of the hydraulic fluid directed from the contraction-side chamber to the expansion-side chamber.

3. The shock absorber according to claim 1, wherein the damping force control unit includes
a valve body provided in the damping passage and a presser configured to generate a pressing force to the valve body, and
the presser changes resistance generated by the valve body to a flow of the hydraulic fluid directed from the expansion-side chamber to the contraction-side chamber and resistance generated by the valve body to a flow of the hydraulic fluid directed from the contraction-side chamber to the expansion-side chamber.

4. The shock absorber according to claim 1, further comprising:
an expansion-side bypass passage provided in parallel with the damping passage;
an expansion-side check valve provided in the expansion-side bypass passage, the expansion-side check valve being configured to allow only a flow of the hydraulic fluid directed from the expansion-side chamber to the contraction-side chamber;
an expansion-side orifice provided in the expansion-side bypass passage, the expansion-side orifice being configured to generate resistance to a flow of the hydraulic fluid directed from the expansion-side chamber to the contraction-side chamber;
a contraction-side bypass passage provided in parallel with the damping passage;
a contraction-side check valve provided in the contraction-side bypass passage, the contraction-side check valve being configured to allow only a flow of the hydraulic fluid directed from the contraction-side chamber to the expansion-side chamber; and
a contraction-side orifice provided in the contraction-side bypass passage, the contraction-side orifice being configured to generate resistance to a flow of the hydraulic fluid directed from the contraction-side chamber to the expansion-side chamber.

5. The shock absorber according to claim 1, further comprising:
an expansion-side subsidiary valve provided in the damping passage in series with the damping force control unit, the expansion-side subsidiary valve being configured to allow only a flow of the hydraulic fluid directed from the expansion-side chamber to the contraction-side chamber and generate resistance to the flow of the hydraulic fluid; and
a contraction-side subsidiary valve provided in the damping passage in parallel with the expansion-side subsidiary valve, the contraction-side subsidiary valve being configured to allow only a flow of the hydraulic fluid directed from the contraction-side chamber to the expansion-side chamber and generate resistance to the flow of the hydraulic fluid.
